# EUROPÄISCHE PATENTSCHRIFT

(11) **EP 1 366 868 B1**
(45) Veröffentlichungstag und Bekanntmachung des Hinweises auf die Patenterteilung: **06.05.2020**
(21) Anmeldenummer: 03011597.6
(22) Anmeldetag: 22.05.2003
(51) Int. Cl.: B25J 9/16

(54) **Verfahren und Vorrichtung zur Kompensation der Trägheitskräfte eines Handhabungssystems**
Method and device for compensating the inertial forces of a manipulator
Méthode et dispositif pour compenser les forces d'inerties d'un manipulateur

(30) Priorität: 28.05.2002 DE 10223670
(43) Veröffentlichungstag der Anmeldung: 03.12.2003
(73) Patentinhaber: KUKA Deutschland GmbH, 86165 Augsburg (DE)
(72) Erfinder: Schnoor, Bernd, 86316 Friedberg (DE); Bischoff, Rainer, 86163 Augsburg (DE)
(74) Vertreter: Schlotter, Alexander Carolus Paul

(56) Entgegenhaltungen:
- EP-A- 0 333 876
- WO-A-98/42482
- DE-A- 3 810 691
- DE-A- 4 238 795
- US-A- 4 928 047
- PATENT ABSTRACTS OF JAPAN vol. 013, no. 555 (M-904), 11. Dezember 1989 (1989-12-11) -& JP 01 228783 A (TOSHIBA CORP), 12. September 1989 (1989-09-12)
- PATENT ABSTRACTS OF JAPAN vol. 009, no. 116 (P-357), 21. Mai 1985 (1985-05-21) -& JP 60 003714 A (HITACHI SEISAKUSHO KK), 10. Januar 1985 (1985-01-10)
- PATENT ABSTRACTS OF JAPAN vol. 014, no. 364 (M-1007), 7. August 1990 (1990-08-07) -& JP 02 131892 A (SHARP CORP), 21. Mai 1990 (1990-05-21)
- PATENT ABSTRACTS OF JAPAN vol. 009, no. 217 (P-385), 4. September 1985 (1985-09-04) -& JP 60 077210 A (NIPPON DENSHIN DENWA KOSHA), 1. Mai 1985 (1985-05-01)

## Beschreibung

Die Erfindung betrifft sowohl ein Verfahren zum Bewegen eines mehrachsigen Handhabungssystems mit einer Anzahl von Antriebs- und Steuereinrichtungen zum Bewegen der Achsen sowie einem mit einer Hand des Handhabungssystems verbundenen Greifwerkzeug als auch ein Handhabungssystem mit einer Mehrzahl von beweglichen Achsen und diesen zugeordneten Antriebs- und Steuereinrichtungen sowie mit mindestens einem mit einer Hand des Handhabungssystems verbundenen Greifwerkzeug.

Der Einsatz von mehrachsigen Handhabungssystemen, insbesondere in Form von Industrierobotern, im Rahmen spezieller Handhabungstätigkeiten ist beispielsweise aus der DE 299 00 899 U1 bekannt. Bei einem dort beschriebenen Lagersystem für ein Verteilzentrum von Waren kommen Roboter als Vereinzelungsgeräte zum Einsatz, um so bei verringertem Personal- und Energieeinsatz und ergonomisch ungünstigen Umgebungsbedingungen für eine zeitlich verkürzte Umverteilung und Kommissionierung von in größeren Mengen gelieferten Waren auf kleinere und unterschiedlich bestückte Ladungen zu sorgen.

Darüber hinaus ist aus der Praxis der Einsatz von Industrierobotern insbesondere am Ende von Produktionslinien bekannt und weit verbreitet. In der Regel werden hierzu spezielle Palettierroboter mit vier aktiven und einer fünften passiven Achse eingesetzt, bei denen letzere durch eine Parallelogrammstruktur derart mitgeführt wird, dass die Handachse des Palettierroboters immer vertikal ausgerichtet ist, d. h. der zum Befestigen eines Greifwerkzeugs dienende Handflansch ist immer parallel zur Bodenebene orientiert. Darüber hinaus sind auch sogenannte Portalroboter mit drei linear oder rotatorisch bewegten Achsen bekannt.

Der Palettier- bzw. Kommissionierprozess, sei es das Aufnehmen eines (Waren-)Gegenstands mittels eines geeigneten Greifwerkzeugs sowie der anschließende Transport oder das Absetzen des Gegenstands auf einer Palette, läuft dabei grundsätzlich nach einem festen Schema ab: Der Gegenstand wird mittels des Greifwerkzeugs in einer definierten Position - meist auf einem Förderer - aufgenommen und zunächst mit begrenzter Geschwindigkeit und Beschleunigung kurz um beispielsweise 1 bis 2 cm angehoben. Anschließend erfolgt ein möglichst schnelles Bewegen zu einer Position oberhalb des Ablageortes auf einer Zielpalette, wobei die Aufnahmeposition sowie der genaue Ablageort in der Regel von einem speziellen Bewegungsalgorithmus, z.B. einem Palettieralgorithmus, d.h. einer entsprechenden Software vorgegeben wird. Am Ende der Bewegung wird der Gegenstand langsam am Zielort, beispielsweise auf der Palette, abgesetzt. Der gesamte vorstehend beschriebene Prozess kann dabei mit Einzel- oder Mehrfachgriff ablaufen und ist nicht auf Palettier- oder Kommissioniervorgänge beschränkt, sondern in allgemeiner Form Teil einer Vielzahl von Handhabungsprozessen.

Grundsätzlich ist erstrebenswert, ein Handhabungssystem, beispielsweise einen Roboter, mit höchster Beschleunigung und höchstmöglicher Geschwindigkeit zu verfahren, um dadurch möglichst kurze Zykluszeiten zu erreichen und die wirtschaftliche Effizienz des Prozesses zu optimieren. Derartige schnelle Bewegungen weisen jedoch allgemein, wie insbesondere beim Palettieren unmittelbar einsichtig ist, eine seitliche, parallel zum Boden verlaufende Bewegungskomponente auf. Bei einer hohen Beschleunigung in seitlicher Richtung wirken dadurch entsprechend große Trägheitskräfte in entgegengesetzter Richtung auf den handzuhabenden Gegenstand, was in der Praxis bei Palettierrobotern mit vertikaler Handachse zu erheblichen Problemen führt.

Die Trägheitskräfte greifen generell im Schwerpunkt des bewegten Gegenstands an, wohingegen die durch das Greifwerkzeug, das in der Regel als Saug- und/oder Klemmgreifer ausgebildet ist und den Gegenstand im wesentlichen an dessen Oberseite hält, vermittelten Halte- bzw. Beschleunigungskräfte entsprechend in einem Bereich außerhalb des Schwerpunkts des bewegten Gegenstands angreifen. Das Auftreten eines solchen Kräftepaares, Halte- und Beschleunigungskräfte einerseits, Trägheitskräfte andererseits, bewirkt ein Drehmoment senkrecht zur Bewegungsrichtung, welches bewirkt, dass der Gegenstand an seiner bezüglich der Bewegungsrichtung vorderen Seite eine zusätzlich zur Gewichtskraft nach unten wirkende Kraft, d.h. in der Regel vom Greifwerkzeug weg erfährt.

Dort, wo die größten Zugkräfte zwischen Greifwerkzeug und Gegenstand auftreten, d.h. direkt an der vorderen Kante, besteht die größte Gefahr des Abreißens, wenn die sich überlagernden Kräfte (Gewichtskraft des Gegenstands und abwärts gerichtete Zugkraft aus dem durch Beschleunigung und Trägheit bewirkten Drehmoment) größer werden als die Haltekraft des Greifwerkzeugs. Es ist ausreichend, wenn dieser Zustand nur an einer Kante des Greifwerkzeugs auftritt, um den Gegenstand komplett zu verlieren. Das skizzierte Verhalten ist noch kritischer, wenn der Gegenstand, bei dem es sich in der Regel um einen quaderförmigen Körper handelt, in Richtung der Gegenstands-Flächendiagonalen beschleunigt wird.

Beim sortenreinen Palettieren, z.B. am Ende von Produktionslinien, lässt sich Abhilfe schaffen, indem an den Seiten des Greifwerkzeugs zusätzliche Klappen, beispielsweise mit durch Pneumatik betriebenen Zylindern, vorgesehen werden, die den Gegenstand entgegen der Wirkung schädlicher Kraft- und Momenteinwirkungen zusätzlich halten.

Beim Kommissionieren, d.h. beim sortengemischten Palettieren, funktioniert dieses Prinzip jedoch nicht, da hier der Palettiervorgang aus Gründen der Palettenstabilitlät grundsätzlich an den Palettenseiten beginnt. Im Falle einer Paletten-Instabilität ist auf diese Weise gewährleistet, dass die Palettenladung immer zur Mitte der Palette rutscht und nicht nach außen. Andererseits führt ein solches Vorgehen dazu, dass anschließend einzelne Gegenstände in z.T. enge "Lücken" auf der Palette versenkt werden müssen. Daher darf das Greifwerkzeug keinesfalls über die Kanten des Gegenstandes hinausragen, so dass bekannte Kommissionierverfahren nur mit beschränkter Verfahrgeschwindigkeit ausführbar sind, um ein Verlieren von Gegenständen möglichst auszuschließen.

Aus der DE 44 41 240 C1 ist ein Verfahren und eine Vorrichtung bekannt, mit deren Hilfe eine Bewegung eines Gegenstandes auf einer vorprogrammierten Bahn ermöglicht wird.

Dies wird dadurch erreicht, dass eine Kompensationseinheit ständig eine das System charakterisierende Bewegungsgleichung löst und eine Kompensationsgröße ermittelt, die unmittelbar als Stellgröße auf das System einwirkt. Dadurch wird eine genauere und schnellere Bewegung des Gegenstandes längs der vorbestimmten Bahn ermöglicht. Damit ist es möglich, die Bewegung von Gegenständen auf einer programmierten Bahn möglichst ruckfrei und schnell durchzuführen. Nachteilig bei einer solchen Bewegungssteuerung eines Gegenstandes ist insbesondere, dass keinerlei Vorkehrungen zur Optimierung des Bahnverhaltens hinsichtlich einer gleichmäßigen Kräfteverteilung einer Verbindung zwischen Greifwerkzeug und bewegtem Gegenstand getroffen werden. Die DE 44 41 240 C1 zielt zwar auf das Erreichen einer möglichst kräftefreien Bewegung eines Gegenstandes ab, klammert hierbei jedoch die grundsätzlich erforderlichen Beschleunigungsphasen am Anfang und am Ende der Bewegung aus, die nach dem Vorstehenden beim Einsatz von Industrierobotern zum Bewegen von Gegenständen in besonderem Maße problembehaftet sind.

Aus der JP 60 003714 A ist ein Verfahren zum Steuern eines Roboters bekannt, bei dem in jedem Interpolationsschritt das Trägheitsmoment und Gravitationsdrehmoment bestimmt und Steuervariablenkonstanten individueller Antriebssysteme entsprechend des Ergebnisses kompensiert werden, so dass das Gravitationsdrehmoment, das als ein Lastmoment wirkt, komplett kompensiert wird.

Der Erfindung liegt die Aufgabe zugrunde, unter Vermeidung der vorstehend aufgeführten Nachteile ein Verfahren und eine Vorrichtung anzugeben, so dass mit möglichst einfachen konstruktiven Mitteln eine zeitliche Verkürzung des mit einem Bewegen von Gegenständen verbundenen Handhabungsvorgangs, insbesondere beim Palettieren oder Kommissionieren, erreichbar ist, wobei eine größtmögliche Transportsicherheit für die bewegten Gegenstände gegeben ist.

Diese Aufgabe löst die Erfindung durch ein Verfahren nach Anspruch 1, bei dem die Bewegung, unter Berücksichtigung von Schwerpunktlage und Gewicht des zu bewegenden Gegenstandes, durch aktive Steuerung einzelner Achsen des Handhabungssystems derart erfolgt, dass der Gegenstand gemeinsam mit Greifwerkzeug und Handflansch seitlich verkippt wird, so dass bewegungsabhängige Momente auf den vom Greifwerkzeug gehaltenen Gegenstand weitgehend ausgeschaltet werden und dass zwischen Gegenstand und Greifwerkzeug im wesentlichen nur Normalkräfte wirken.

Weiterhin sieht die Erfindung eine Vorrichtung nach Anspruch 4 vor, die eine Einrichtung zur aktiven Steuerung einzelner Achsen des Handhabungssystems aufweist, so dass der Gegenstand gemeinsam mit Greifwerkzeug und Handflansch seitlich verkippt wird, unter Berücksichtigung von Schwerpunktlage und Gewicht des zu bewegenden Gegenstandes derart, dass bewegungsabhängige Momente auf den vom Greifwerkzeug gehaltenen Gegenstand weitgehend ausschaltbar sind und zwischen Gegenstand und Greifwerkzeug im wesentlichen nur Normalkräfte wirken.

Normalkräfte im Sinne der Erfindung sind solche Kräfte, die senkrecht zur Kontaktfläche zwischen Greifwerkzeug und bewegtem Gegenstand auf das Greifwerkzeug und den Gegenstand wirken.

Auf diese Weise wird erreicht, dass unter Berücksichtigung der Gewichts- und Trägheitskräfte des zu handhabenden Gegenstandes im wesentlichen keine unerwünschten Kräfte und Momente auf das Greifwerkzeug und den Gegenstand wirken, die zum Abfallen oder zur Lageverschiebung des Gegenstands führen können, so dass der Gegenstand optimal schnell verfahren werden kann, wodurch bei einem breiten Spektrum von Handhabungstätigkeiten kürzere Taktzeiten erreichbar sind, was wiederum wirtschaftliche Vorteile mit sich bringt. Nach einer bevorzugten Ausgestaltung des erfindungsgemäßen Verfahrens ist hierzu vorgesehen, dass vorbestimmte Achsen des Handhabungssystems wenigstens zeitweise zum Kompensieren von Kräften und Momenten gesteuert werden. Somit ist eine aktive Kompensation unerwünschter Kräfte und Momente möglich.

Grundsätzlich ist z.B. beim Kommissionieren davon auszugehen, dass die Paketmaße sowie das Gewicht jedes einzelnen Gegenstandes bekannt sind. Diese Informationen sind in einem Warenverteilzentrum im Lagerverwaltungssystem gespeichert und werden nach Bedarf von den Kommissioniersystemen abgerufen. Weiterhin ist davon auszugehen, dass der Schwerpunkt der einzelnen Gegenstände weitgehend mit dem geometrischen Mittelpunkt des Gegenstandes übereinstimmt (geringfügige Abweichungen kann es z.B. bei in Kartons verpackten Flaschen geben, die einen dünnen, langen Hals haben) .

Sobald der Robotersteuerung der Start- und Endpunkt sowie ggf. bestimmte an diesen Punkten erforderliche Handorientierungen einer Bewegung bekannt sind, sind auch alle weiteren kinematischen Informationen (Bahnbeschleunigung- und Bahngeschwindigkeitsvektoren) prinzipiell verfügbar. Die Robotersteuerung ist dann in der Lage, mit den verfügbaren Daten des handzuhabenden Gegenstandes jeweils eine Bahnplanung durchzuführen, die im Ergebnis dazu führt, dass die resultierenden Kräfte, die zwischen Greifwerkzeug und Gegenstand wirken, weitgehend Normalkräfte sind. Die resultierende Kraft ist somit eine Kraft, die weitgehend orthogonal zur Greiffläche wirkt. Da eine absolut gleichmäßige Verteilung praktisch nicht erreichbar ist, wird das Bahnverhalten hinsichtlich einer gleichmäßigen Kraftverteilung optimiert.

Falls die Gewichts- und Trägheitskräfte sowie die durch diese Kräfte bewirkten Drehmomente des zu handhabenden Gegenstands nicht bekannt sind, ist nach einer weiteren Ausgestaltung der Erfindung vorgesehen, dass vom Gegenstand auf das Greifwerkzeug ausgeübte Kräfte und Momente durch am Greifwerkzeug und/oder zwischen Hand und Greifwerkzeug vorhandene Sensoren gemessen werden. Zu diesem Zweck ist vorzugsweise zwischen Hand- und Greifwerkzeug zumindest ein Sensor zum Messen von Kräften und Momenten vorhanden. In einer weiteren bevorzugten Ausgestaltung der Erfindung ist vorgesehen, dass am Greifwerkzeug selbst Sensoren zum Messen von Kräften und Momenten angeordnet sind. Im Zuge einer flächendeckenden Sensorbestückung des Greifwerkzeugs lässt sich ein tatsächliches Kraftprofil am Greifwerkzeug messen. Durch das Vorsehen derartiger Sensoren ist es möglich, aus den während der Verfahrbewegung des Handhabungssystems gewonnenen Messdaten eine optimal geregelte Bahnkurve zu bestimmen und nicht lediglich eine vorbestimmte Bahnkurve abzufahren, so dass eine flexible Adaption an Gegebenheiten des Handhabungsprozesses möglich ist.

In Kombination mit der aktiven Steuerung kann das Greifwerkzeug am Handhabungsgerät zumindest teilweise frei beweglich gehalten werden, wobei dies zunächst derart geschehen kann, dass Achsen des Handhabungssystems zumindest phasenweise beim Bewegen des Gegenstands im wesentlichen frei beweglich geschaltet werden.

Anstelle der ständigen aktiven Ansteuerung aller Achsen eines Handhabungssystems zu Kompensationszwecken, die bei den bislang beschriebenen Ausgestaltungen der Erfindung ermöglicht, den zu handhabenden Gegenstand auf einer optimalen Bahn zur Minimierung der auf das Greifwerkzeug einwirkenden Momente zu bewegen, können einzelne Achsen des Handhabungs-systems, insbesondere endständige Achsen, wie beispielsweise die Handgelenksachsen eines Industrieroboters, bei dieser Ausgestaltung zu bestimmten Zeiten weich geschaltet sein, d.h. sie sind zeitweise unter dem Einfluss äußerer Kräfte im wesentlichen frei beweglich, so dass die um diese Achsen auftretenden Momente das zu bewegende Objekt wenigstens teilweise - nach Maßgabe der Gesetze der Mechanik - selbständig derart ausrichten, dass zwischen Greifwerkzeug und Gegenstand im wesentlichen nur Normalkräfte wirken. Eine aktive Kompensation muss dann nur bezüglich auftretender Reibungsverluste etc. durchgeführt werden, die einer vollständigen Ausrichtung entgegenwirken.

In einer äußerst bevorzugten Ausgestaltung der Erfindung ist vorgesehen, dass aus Kippwinkeln der zeitweise frei beweglich geschalteten Achsen Eigenschaften des bewegten Gegenstands, insbesondere ein Gewicht und/oder eine Massenverteilung und/oder Trägheitsmomente und oder gegebenenfalls weitere Eigenschaften bestimmt werden. Auf diese Weise können beispielsweise zum gezielten Abbremsen, d.h. einem Abbremsmanöver, bei dem zwischen Greifwerkzeug und Gegenstand im wesentlichen nur Normalkräfte auftreten, eines zuvor beschleunigten Gegenstandes und zum Positionieren und gezielten Absetzen des transportierten Gegenstandes die anfangs weich geschalteten Achsen wieder in einer vorzugebenden Richtung angesteuert werden. So ist z.B. möglich, aus den Kippwinkeln einzelner Achsen während der anfänglichen Beschleunigungs- und Verfahrbewegung auf das Gewicht des Objekts zu schließen und dadurch einen optimalen Bremsweg zu berechnen. Diese Variante hat gegenüber anderen Ausgestaltungen der Erfindung den zusätzlichen Vorteil, dass das Gewicht und die Trägheitsmomente des Gegenstands vor dem Handhabungsvorgang nicht bekannt sein müssen und keine zusätzliche Sensorik außer der in den Achsen des Handhabungssystems generell sowieso vorhandenen verwendet wird.

Im Zuge einer Ausbildung der Verbindung zwischen der Hand des Handhabungssystems und dem Greifwerkzeug als zeitweise frei be-wegliches Gelenk kommt es im allgemeinen zu Schwingungen, was einem genauen Positionieren des Objekts abträglich ist. Erfindungsgemäß kann vorgesehen sein, dass aufgrund bekannten oder gemessenen Gewichts und Trägheitsmomenten des Gegenstands ein Bahnplanungsalgorithmus zur Minimierung von Schwingungen des zu verfahrenden Gegenstandes, insbesondere während des Abbremsvorgangs, die Bahnparameter bestimmt und die aktiven Achsen des Handhabungssystems demgemäß angesteuert werden. Zur Bestimmung von Gewicht und Trägheitsmomenten des Gegenstands können in bevorzugter Ausgestaltung Sensoren im oder am frei beweglichen Gelenk die erforderlichen Parameter für eine Bahnplanung bzw. Bahnregelung erfassen. In bevorzugter Ausgestaltung ist hierzu eine Kombination aus einem steifen Kraft-Momenten-Sensor und einem daran befestigten frei beweglichen Gelenk ohne Sensorik vorgesehen. Der Sensor kann dabei auf die Bestimmung des resultierenden Kraftvektors beschränkt bleiben, da durch das zeitweise frei bewegliche Gelenk zwischen Handflansch und Greifwerkzeug keine Momente mehr auftreten können, die bei vorbekannten Handhabungssystemen zu einem Abreißen des zu handhabenden Gegenstands führen können.

Die Figuren zeigen:
- Fig. 1a: eine perspektivische Darstellung eines sechsachsigen Industrieroboters mit Greifwerkzeug und zu handhabendem Gegenstand;
- Fig. 1b: eine perspektivische Darstellung eines Palettierroboters mit vier aktiven und einer fünften passiven Achse;
- Fig. 1c: eine perspektivische Ansicht eines sechsachsigen Industrieroboters mit Greifwerkzeug und Handhabungsgegenstand, dessen Achsen zum Erreichen von Normalkräften nach dem erfindungsgemäßen Verfahren gesteuert sind.
- Fig. 2a: eine schematische Detaildarstellung eines Greifwerkzeugs mit Sensoren und einem zu handhabenden Gegenstand;
- Fig. 2b: eine schematische Darstellung einer Ausgestaltung mit zwischen Handflansch und Greifwerkzeug angeordnetem Kraft-/Momentensensor;
- Fig. 3: eine schematische Darstellung der insbesondere beim seitlichen Beschleunigen eines zu handhabenden Gegenstands auftretenden Kräfte und Momente;
- Fig. 4: eine schematische Darstellung eines Handhabungsvorgangs;
- Fig. 5a bis 5c: schematische Darstellungen verschiedener Ausgestaltungen eines Handhabungssystems mit frei beweglicher Verbindung zwischen Hand und Greifwerkzeug, die nicht Teil der Erfindung sind.
- Fig. 6: ein Ablaufdiagramm der erfindungsgemäßen Bewegungssteuerung; und
- Fig. 7: eine qualitative Darstellung der wichtigsten Einflussgrößen während einer erfindungsgemäßen Bewegung eines mehrachsigen Handhabungssystems.

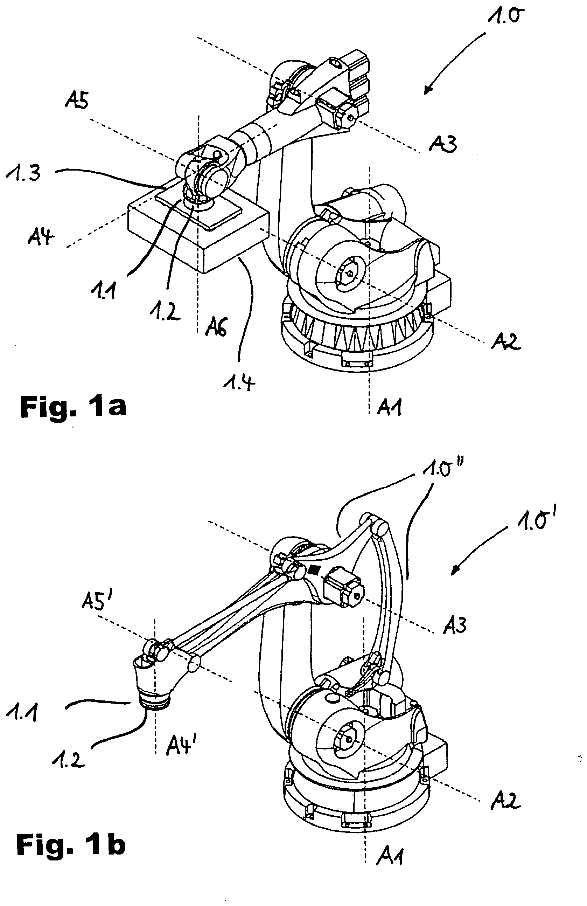

Figur 1a zeigt ein Handhabungssystem 1.0 in Form eines typischen Sechs-Achs-Roboters mit einer Kinematik für Bewegungen in sechs Freiheitsgraden. Zu diesem Zweck weist das dargestellte Handhabungssystem 1.0 sechs aktive Achsen A1 bis A6 auf. Eine Hand 1.1 mit Handflansch1.2 trägt ein Greifwerkzeug 1.3 in Form eines Sauggreifers, mit dem das Handhabungssystem 1.0 in der Lage ist, einen Gegenstand 1.4 zu heben und im Raum zu transportieren. Die Sechs-Achs-Kinematik ermöglicht quasi beliebige Posen (womit die Gesamtheit von Position und Orientierung bezeichnet wird) der Hand 1.1, so dass komplexe angepasste Bewegungsabläufe möglich sind.

Der in Fig. 1b gezeigte typische Vier-Achs-Palettierroboter 1.0' besitzt vier aktive Achsen A1 - A3, A4' sowie eine fünfte passive Achse A5' und ist somit zur Realisierung von Bewegungen mit vier Freiheitsgraden ausgebildet. Bei einer solchen Kinematik ist die Handachse A4', die durch die Hand 1.1 und den Handflansch 1.2 verläuft, aufgrund einer Parallelogrammstruktur 1.0" des Palettierroboters 1.0' grundsätzlich vertikal orientiert, d. h. eine Befestigungsfläche des Handflansches 1.2 liegt parallel zur Bodenebene. Derartige Palettierroboter 1.0' zeigen aufgrund der vertikalen Stellung der Handachse A4' die eingangs beschriebenen Nachteile beim (schnellen) seitlichen horizontalen Bewegen von zu handhabenden Gegenständen 1.4.

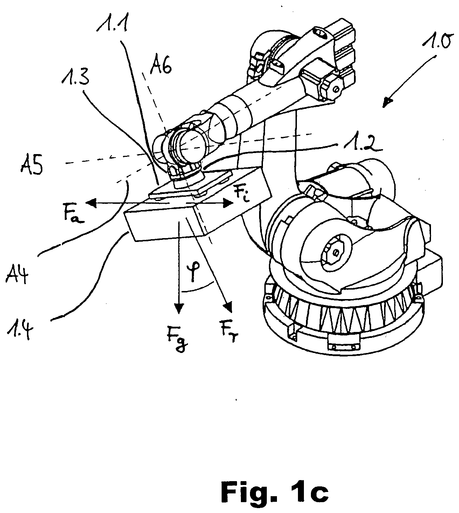

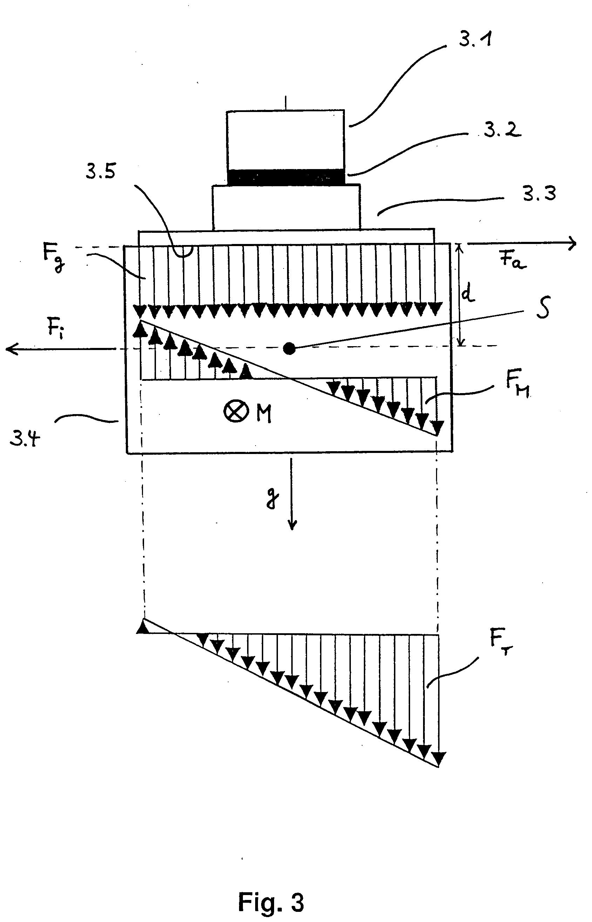

Die erfindungsgemäße Lösung der zugrundeliegenden Aufgabe sieht vor, dass die Achsen eines mehrachsigen Handhabungssystems derart bewegt werden, dass die durch die Bewegung hervorgerufenen Momente auf den zu handhabenden Gegenstand weitgehend ausgeschaltet werden, wobei zwischen Gegenstand und Greifwerkzeug im wesentlichen Normalkräfte wirken. Dazu ist es notwendig, bei bekannten Roboter-Kinematiken mit vier, sechs oder einer anderen Anzahl aktiver Achsen einzelne Achsen derart anzusteuern und/oder auszubilden - nämlich zumindest zeitweise weitgehend freibeweglich, ggf. gedämpft -, dass Hand, Greifwerkzeug und Gegenstand eine der gewünschten Kraftwirkung zuträgliche Pose im Raum zu möglichst jedem Zeitpunkt der durchzuführenden Bewegung einnehmen. Ein entscheidender Parameter hierbei ist der Anstellwinkel ϕ, d.h. der Neigungswinkel der Handachse A6, A4' gegenüber der Vertikalen. Bei einer Sechs-Achs-Roboterkinematik gemäß Fig. 1a lässt sich ein Anstellwinkel ϕ, bei dem die beim Bewegen des Gegenstandes 1.4 resultierende Kraft Fᵣ beinahe vollständig als Normalkraft wirkt, gemäß Fig. 1c allein durch eine auf Schwerpunktlage und Gewicht des zu handhabenden Gegenstandes 1.4 adaptierte Bahnplanung realisieren. Hierbei muss gemäß Fig. 1c die Bahnplanung für die Achsen A4, A5 und A6 entsprechend angepasst werden. Zu kompensieren sind hierbei durch den Anstellwinkel ϕ hauptsächlich die Effekte, die durch die Massenträgheit des zu handhabenden Gegenstandes 1.4 hervorgerufen werden. Eine Luftreibung des Gegenstandes 1.4 und sonstiger Reibungseffekte treten dagegen zurück und können in der Regel vernachlässigt werden. Die in Fig. 1c gezeigten Kräfte werden anhand von Fig. 3 näher erläutert.

Bei einer Vier-Achs-Kinematik gemäß Fig. 1b müssen zwecks Realisierung eines geeignet angepassten Anstellwinkels ϕ passive oder aktive Elemente im Greifwerkzeug 1.3 integriert werden.

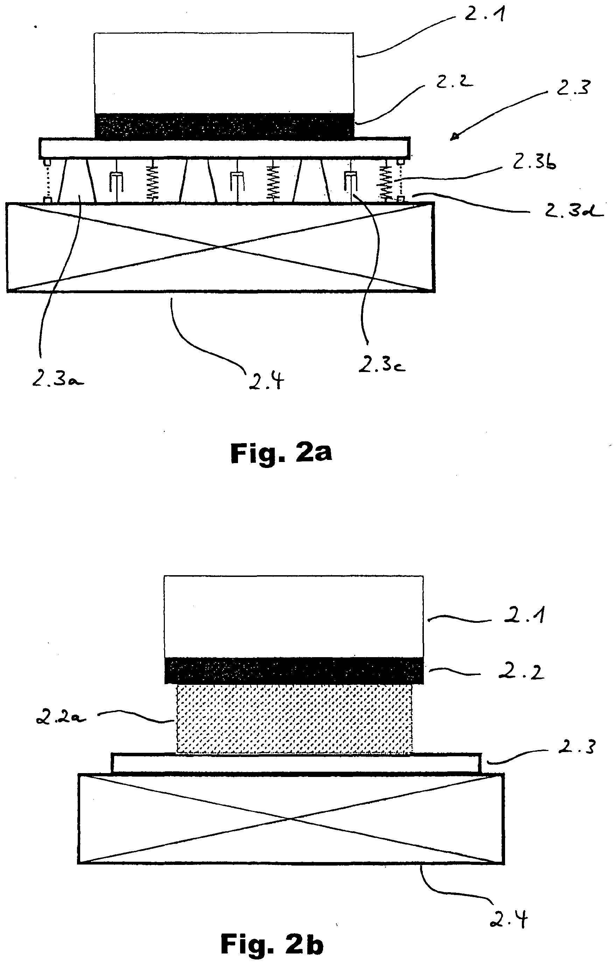

Ein entsprechendes Greifwerkzeug 2.3 ist in Fig. 2a schematisch dargestellt. Es ist über den Handflansch 2.2 mit der Hand 2.1 des Handhabungssystems verbunden. Das Greifwerkzeug 2.3 weist zum Halten des zu handhabenden Gegenstandes 2.4 eine Anzahl von Saugnäpfen 2.3a sowie weitere Elemente in Form von Federn 2.3b und Dämpfern 2.3c auf. Darüber hinaus ist am Greifwerkzeug 2.3 eine Entfernungsmesseinheit 2.3d vorgesehen.

Die einzelnen Elemente 2.3a bis 2.3c können als rein passive oder als aktiv ansteuerbare Elemente ausgebildet sein, so dass bei Verwendung eines derartigen Greifwerkzeugs mit einer Vier-Achs-Kinematik ein angepasster Anstellwinkel ϕ durch das Greifwerkzeug 2.3 selbst realisiert werden kann.

Über die Entfernungsmesseinheit 2.3d, hier gezeigt in einer Ausgestaltung mit Infrarotsensoren, lässt sich eine ungewollte Schieflage des Gegenstandes 2.4 messen, die ein Maß für die Trägheitskraft Fᵢ darstellt, was insbesondere dann von entscheidender Bedeutung ist, wenn die entsprechenden Eigenschaften des Gegenstandes 2.4 nicht a priori bekannt sind.

Alternativ ist gemäß der in Fig. 2b gezeigten Ausgestaltung das Vorsehen eines Kraft-/Momentensensors 2.2a zwischen Handflansch 2.2 und Greifwerkzeug 2.3 möglich, mit dem sich ebenfalls die auf den Gegenstand 2.4 wirkenden Trägheitskräfte bestimmen lassen.

Fig. 3 zeigt in einer schematische Darstellung die aufgrund einer seitlichen Beschleunigung eines Gegenstandes auftretenden Kräfte und Momente. An einer Hand 3.1 eines in dieser Darstellung nicht gezeigten Handhabungssystems ist an einem Handflansch 3.2 ein Greifwerkzeug 3.3 in Form eines Vakuum-Sauggreifers befestigt. Ein Aufnehmen eines Gegenstandes 3.4 erfolgt in diesem Fall durch Festsaugen des Greifwerkzeugs 3.3 an der Oberseite 3.5 des Gegenstandes 3.4. Der Massenschwerpunkt S des Gegenstands 3.4 liegt in einem Abstand d unterhalb der Oberseite 3.5 des Gegenstandes 3.4.

Wird der Gegenstand 3.4 durch das Handhabungssystem zunächst vertikal angehoben, so greift am Greifwerkzeug 3.3 auf dessen Grifffläche verteilt - die beim gezeigten Ausführungsbeispiel im wesentlichen der Fläche der Oberseite 3.5 des Gegenstandes 3.4 entspricht - die durch die Erdbeschleunigung g hervorgerufene Gewichtskraft F_{g} des Gegenstandes 3.4 an. Wird nun der Gegenstand 3.4 - bei zwangsweise beibehaltener Ausrichtung - durch eine Kraft Fₐ seitlich beschleunigt, so bildet sich aufgrund der im Schwerpunkt S des Gegenstandes 3.4 angreifenden Trägheitskraft Fᵢ, die betragsmäßig der beschleunigenden Kraft Fₐ entspricht, jedoch entgegengesetzt zu dieser orientiert ist, ein Kräftepaar, das aufgrund des endlichen Abstands d zwischen ihren Wirkungslinien (in Fig. 3 gestrichelt dargestellt) ein Drehmoment M bewirkt. Das Drehmoment M ist senkrecht zur Blattebene orientiert und erzeugt eine zusätzliche Kraftkomponente F_{M}, die auf eine in Fig. 3 qualitativ dargestellte Weise vom Schwerpunkt S des Gegenstandes 3.4 aus in Bewegungsrichtung die Gewichtskraft F_{g} verstärkt, während entgegen der Bewegungsrichtung eine gegebenenfalls vollständige Kompensation der Gewichtskraft F_{g} auftritt. Dadurch kann es, da die zusätzliche Kraftkomponente F_{M} mit Abstand zum Schwerpunkt S im wesentlichen betragsmäßig proportional zum Betrag der beschleunigenden Kraft Fₐ zunimmt, im Bereich der in Bewegungsrichtung vorderen Kante des Greifwerkzeugs 3.3 zu einem Abreißen und damit zu einem vollständigen Verlust des zu handhabenden Gegenstandes 3.4 kommen. Das Profil der resultierenden Kraft Fᵣ, der Vektorsumme aus F_{g} und F_{M}, ist im unteren Teil von Fig. 3 dargestellt.

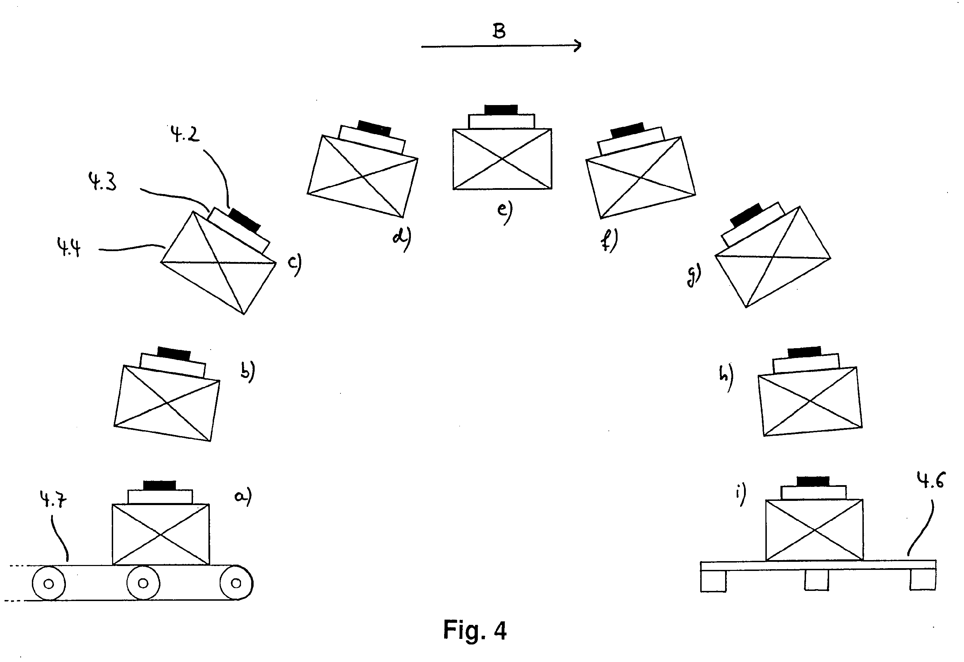

Um sicherzustellen, dass während der gesamten Bewegung des zu handhabenden Gegenstandes 3.4 keine derartigen Momente auftreten bzw. solche zumindest reduziert werden und die resultierenden Kräfte Fᵣ, die zwischen Greifwerkzeug 3.3 und Gegenstand 3.4 wirken, im wesentlichen Normalkräfte sind, sieht die Erfindung in einer bevorzugten, in Fig. 4 dargestellten Ausführungsform vor, dass durch aktive Ansteuerung einzelner Achsen des Handhabungssystems das Bahnverhalten hinsichtlich einer gleichmäßigen Kraftverteilung optimiert wird. Gemäß Fig. 4 erfolgt eine Bewegung eines zu handhabenden Gegenstandes 4.4 in Richtung des Pfeils B, wobei der Gegenstand 4.4 durch ein an einem Handflansch 4.2 eines nicht näher gezeigten Handhabungssystems befestigtes Greifwerkzeug 4.3 gehalten ist. Die Darstellung der Fig. 4 zeigt beispielhaft einen Palettiervorgang, bei dem der Gegenstand 4.4 auf einer Palette 4.6 abgesetzt wird. Die Buchstaben a bis i bezeichnen zeitlich aufeinanderfolgende. Schritte des Handhabungsvorgangs.

Der bei der ersten Position, beispielsweise einem Fördermittel 4.7 am Ende einer Produktionslinie, angeordnete Gegenstand 4.4 wird bei a zunächst kurz in vertikaler Richtung angehoben. Anschließend setzt bei b eine seitliche Beschleunigung ein, wie in Fig. 3 dargestellt. Zur Kompensation des dort gezeigten Drehmoments M wird der Gegenstand 4.4 gemeinsam mit Greifwerkzeug 4.3 und Handflansch 4.2 durch aktive Steuerung einzelner Achsen des Handhabungsgeräts leicht seitlich verkippt. Bei c ist die seitliche Beschleunigung am stärksten. Dementsprechend ist die Stellung einzelner Achsen des Handhabungsgeräts zur entsprechenden Kompensation der auftretenden Kräfte und Momente angepasst. Anschließend nimmt die seitliche Beschleunigung ab (d) und bei e wird der Gegenstand 4.4. mit hoher konstanter Geschwindigkeit verfahren. Bei f, g und h wirkt eine durch den Abbremsungsvorgang bedingte negative Beschleunigung, die durch entsprechendes gegensinniges Ansteuern (vgl. b - d) einzelner Achsen des Handhabungsgeräts kompensiert wird. Abschließend wird der Gegenstand 4.4. langsam auf der Palette 4.6 abgesetzt (i).

Bei weich geschalteten Achsen des Handhabungsgeräts bzw. bei Vorsehen eines weichen frei beweglichen Gelenks zwischen Handflansch 4.2 und Greifwerkzeug 4.3 nehmen Greifwerkzeug 4.3 und Gegenstand 4.4 gemäß den Gesetzen der Mechanik teilweise selbständig eine den Darstellungen der Fig. 4 entsprechenden Lage ein, so dass in diesem Fall schädliche Kräfte und Drehmomente in gewissem Umfang selbständig ausgeglichen werden.

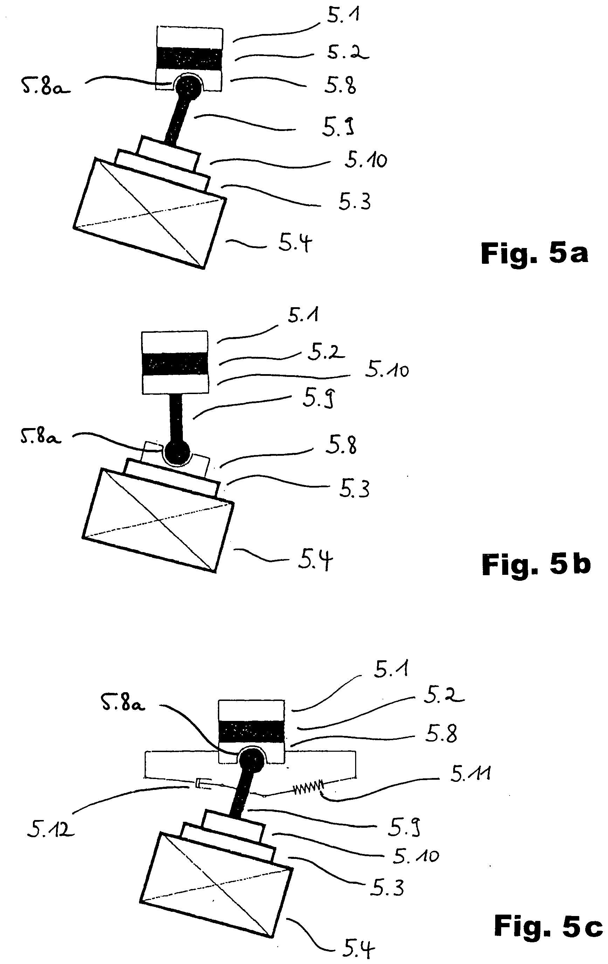

Figuren 5a bis 5c zeigen schematische Darstellungen verschiedener Ausgestaltungen eines Handhabungssystems mit frei beweglicher Verbindung zwischen Hand und Greifwerkzeug, die das Verständnis der Erfindung erleichtern.

In Ausgestaltung nach Fig. 5a weist der mit der Hand 5.1 verbundene Handflansch 5.2 ein Verbindungselement 5.8 mit Gelenklager 5.8a oder dergleichen auf, an dem der Gegenstand 5.4 mittels eines Aufhängeteils 5.9, wie einem Seil, einer Stange, einer Kardanwelle oder dergleichen, frei beweglich aufgehängt ist. Mit dem Aufhängeteil 5.9 ist ein weiteres Verbindungselement 5.10 verbunden, über das das Aufhängeteil 5.9 am Greifwerkzeug 5.3 befestigt ist.

In der Ausgestaltung nach Fig. 5b weist das Verbindungselement 5.8 am Greifwerkzeug 5.3 das Gelenklager 5.8a oder dergleichen zum frei beweglichen Aufhängen des Gegenstands 5.4 an einem der Ausgestaltung der Fig. 5a entsprechenden Aufhängeteil 5.9 auf.

In der Ausgestaltung nach Fig. 5c, die weitgehend derjenigen in Fig. 5a gezeigten entspricht, sind zusätzlich in Verbindung mit dem Verbindungselement 5.8 und dem Aufhängeteil 5.9 variable Feder- 5.11 und Dämpferelemente 5.12 vorgesehen, die ebenfalls für eine gezielte Beeinflussung der Bewegungsbahn des zu handhabenden Gegenstandes 5.4 genutzt werden können. Dies kann durch eine vollständige

Blockierung des Aufhängeteils 5.9 geschehen. Zusätzlich kann in die Elemente 5.11, 5.12 eine Wegmesseinrichtung (nicht gezeigt) integriert sein, um auf diese Weise ggf. unbekannte Eigenschaften des zu handhabenden Gegenstandes 5. 4 ermitteln zu könne. Desgleichen gilt für das am Verbindungselement 5.8 vorhandene Gelenklager 5.8a, das zur Wegmessung nach dem Trackball-Prinzip ausgebildet sein kann.

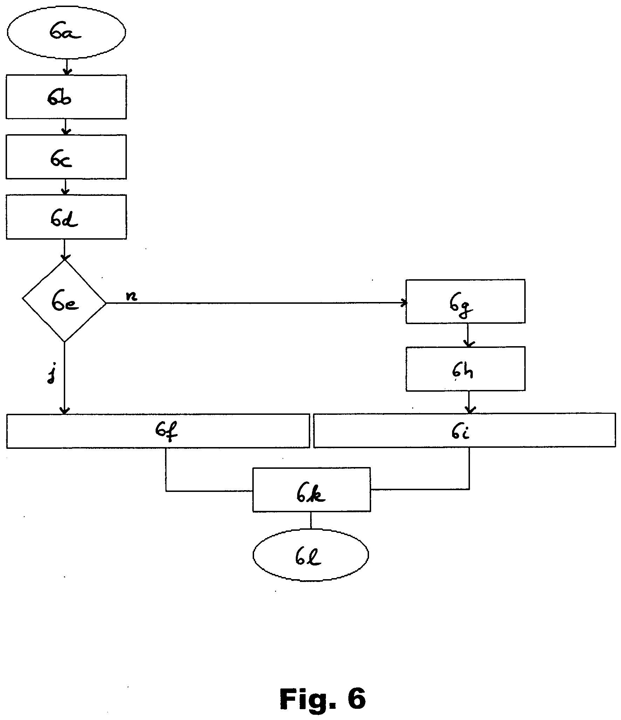

Das Flussdiagramm nach Fig. 6 zeigt die wichtigsten Schritte des erfindungsgemäßen Bewegungsverfahrens. Dargestellt ist die Bewegung von einem Startpunkt bzw. einer Startpose P_{S} zu einem Endpunkt bzw. einer Endpose P_{E}. Die Bewegung von P_{E} zurück zu einem (neuen) Startpunkt P_{S}, läuft entsprechend ab, wobei jedoch typischerweise auf dem Weg zu P_{S}, kein Objekt bewegt wird. Damit sollten auf dem Rückweg alle Parameter für eine Bahnplanung oder -regelung bekannt sein, da es sich nur um interne Parameter des Handhabungssystems handelt.

Nach Verfahrensbeginn 6a wird zunächst bei 6b die Startpose P_{S} und die Endpose P_{E} berechnet. Anschließend erfolgt bei 6c die Fahrt zu P_{S}, wo der Handhabungsgegenstand ergriffen wird 6d. Anschließend wird eine Fallunterscheidung 6e vorgenommen, ob die. Eigenschaften des zu handhabenden Gegenstandes bekannt sind oder nicht. Im Falle bekannter Eigenschaften (j) ist eine Planung der Gesamtbewegung von P_{S} nach P_{E} möglich 6f. Anderenfalls (n) wird bei 6g eine erste Teilbewegung so vorgegeben, dass bestimmte Eigenschaften des zu handhabenden Gegenstandes, z.B. sein Trägheitsmoment, während der Bewegung des Gegenstandes längs der Teiltrajektorie bestimmt werden können. Dies geschieht beispielsweise mittels externen Sensoren, die gemäß Fig. 2 direkt in das den Gegenstand aufnehmende Greifwerkzeug integriert sein können. Aus den Sensorwerten lassen sich bei 6h die Eigenschaften des zu handhabenden Gegenstandes berechnen oder zumindest abschätzen, wozu auch interne Sensorwerte, wie z.B. die Messung des Motorstroms, herangezogen werden können.

Auf diese Weise ist anschließend bei 6i eine Planung des verbleibenden zweiten Teils der Bahnbewegung möglich.

Die Planung der Gesamtbewegung 6f bzw. der Teilbewegung 6i geschieht in beiden Fällen im Hinblick auf P_{E} derart, dass zwischen dem Greifwerkzeug und dem zu handhabenden Gegenstand im wesentlichen nur Normalkräfte wirken, wobei eine zusätzliche Bahnregelung während der Bewegung für den Fall möglich ist, dass das Greifwerkzeug gemäß Fig. 2 mit geeigneten (externen) Sensoren ausgestattet ist. Dabei sind ggf. vorhandene Randbedingungen, wie Geschwindigkeit, maximale Haltekraft des Greifwerkzeugs, Hindernisse im Raum usw. zu berücksichtigen.

Nach Erreichen der Endpose P_{E} wird der zu handhabende Gegenstand durch Öffnen oder dergleichen des Greifwerkzeugs 21 **abgesetzt** 6k, womit die hier beschriebene Bewegung beendet ist 61.

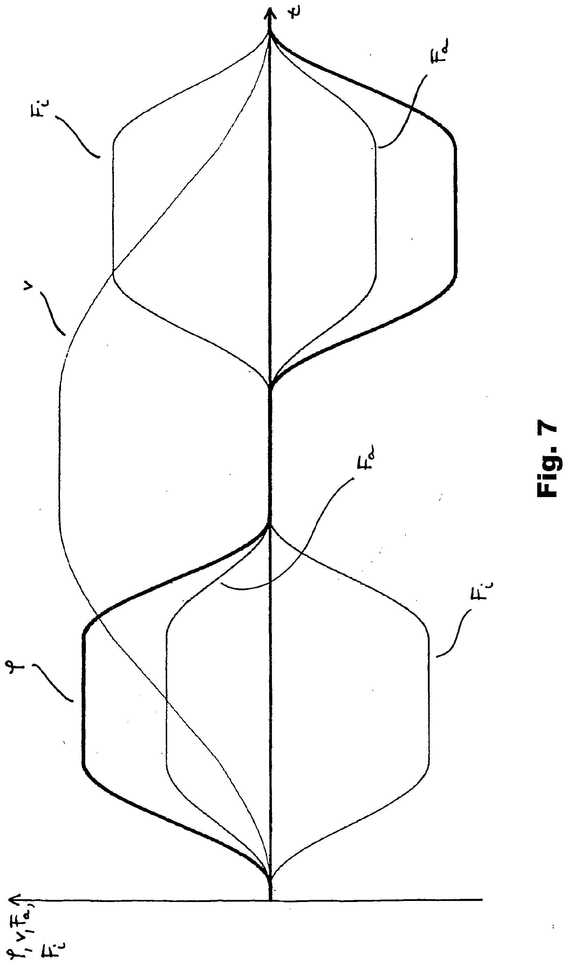

Grundsätzlich ist bei der Bahnplanung in 6f bzw. 6i zwischen den folgenden Ausgestaltungen des Handhabungssystems zu unterscheiden:
a) Bei bekannten Vier-Achs-Palettierrobotern (vergl. Fig. 16b) können gemäß Fig. 2 Greifwerkzeuge mit Sensoren vorgesehen sein. Mittels dieser externen Sensoren ist es in Verbindung mit den internen Sensoren des Roboters möglich, Trägheitskräfte und -momente des zu handhabenden Gegenstandes zu bestimmen und mit Hilfe der Sensoren eine Bahnregelung so vorzunehmen, dass der zu handhabende Gegenstand trotz auftretender schädlicher Kräfte und Momente am Greifwerkzeug gerade nicht abreißt. Dies kann beispielsweise dadurch geschehen, dass die Verfahrgeschwindigkeit immer unter einem kritischen Grenzwert gehalten wird.
b) Bei einem-bekannten Vier-Achs-Palettierroboter, der gemäß Fig. 5 ein sich selbst ausrichtendes Greifwerkzeug bzw. einen sich selbst ausrichtenden Gegenstand aufweist, sind zur Bewegungssteuerung keine weiteren besonderen (externen) Sensoren notwendig. Die Bahnplanung erfolgt ohne Sensoren derart, dass eine geeignete Beschleunigungs- und Bremsbewegung und/oder - bei der Ausgestaltung nach Fig. 5c - ein geeigneter Blockierzeitpunkt berechnet werden, so dass der Gegenstand während der Bewegung nicht vom Greifwerkzeug abreißt.
c) Bei Robotern mit Sechs-Achs-Kinematik können Gegenstand bzw. Greifwerkzeug fest am Handflansch des Roboters befestigt sein. Gemäß Fig. 5 ist es dann möglich, die Handachse zeitweise frei beweglich zu schalten, so dass freies Schwingen des Gegenstandes bzw. Greifwerkzeugs ebenso wie ein Blockieren nach Fig. 5c möglich ist. Besondere Sensoren müssen in diesem Zusammenhang nicht vorgesehen sein, da die Bahnplanung ohne Sensoren derart erfolgt, dass wie unter b) eine geeignete Beschleunigungs- und Bremsbewegung und/oder ein geeigneter Blockierzeitpunkt berechnet werden.
d) In Abgrenzung zu c) ist es auch möglich, die Bahnplanung bei aktiv geschalteter Handachse derart vorzunehmen, dass diese zusammen mit den übrigen Achsen des Roboters so angesteuert wird, dass hinsichtlich der am Greifwerkzeug wirkenden Kräfte eine optimale Bahn abgefahren wird. Dabei ist der Anstellwinkel ϕ der entscheidende Parameter, wie im folgenden anhand von Fig. 7 dargestellt wird.

Fig. 7 zeigt den qualitativen Verlauf des Anstellwinkels ϕ des Greifwerkzeugs gegenüber der Vertikalen, die Bahngeschwindigkeit v, die Bahnbeschleunigungskraft Fₐ sowie die Trägheitskraft Fᵢ in Abhängigkeit von der Zeit t während einer erfindungsgemäßen Bahnbewegung eines mehrachsigen Handhabungssystems.

Zu Beginn der Bewegung (linke Bildhälfte) wirkt eine zeitlich veränderliche positive Beschleunigungskraft Fₐ, die den zu handhabenden Gegenstand von einer anfänglichen Geschwindigkeit v=0 bis auf eine maximale Geschwindigkeit beschleunigt. Entsprechend erfolgt während der Endphase der Bewegung (rechter Bildteil) ein entsprechendes Abbremsen, -Fₐ. Im Mittelteil der Bewegung ist diese beschleunigungsfrei (Fₐ=0) und erfolgt mit konstanter Geschwindigkeit v. Während der Beschleunigungsphasen am Anfang und am Ende der Bewegung treten der jeweils wirkenden Beschleunigungskraft Fₐ entgegengerichtete Trägheitskräfte Fᵢ auf, die gemäß Fig. 3 schädliche Momente am Greifwerkzeug hervorrufen und zu einem Abreißen des Gegenstandes führen können. Um dies zu verhindern, wird im Rahmen des erfindungsgemäßen Verfahrens der Anstellwinkel ϕ, d. h. der Neigungswinkel der Handachse A6, A4' an die jeweiligen Bahnparameter angepasst, was durch aktives Ansteuern bestimmter Achsen A4-A6 des Handhabungssystems oder durch frei bewegliches Ausbilden bzw. Schalten der Handachse A6, A4' erreichbar ist. Auf diese Weise ist sichergestellt, dass aufgrund des angepassten Anstellwinkels ϕ auf das Greifwerkzeug im wesentlichen nur Normalkräfte bewirken.

### Bezugszeichenliste

- 1.0: Handhabungssystem (Sechs-Achs-Roboter)
- 1.0': Handhabungssystem (Vier-Achs-Palettierroboter)
- 1.0": Parallelogrammstruktur
- 1.1: Hand
- 1.2: Handflansch
- 1.3: Greifwerkzeug
- 1.4: Gegenstand
- 2.1: Hand
- 2.2: Handflansch
- 2.2a: Kraft-/Momentensensor
- 2.3: Greifwerkzeug
- 2.3a: Saugnapf
- 2.3b: Feder
- 2.3c: Dämpfer
- 2.3d: Entfernungsmeßeinheit
- 2.4: Gegenstand
- 3.1: Hand
- 3.2: Handflansch
- 3.3: Greifwerkzeug
- 3.4: Gegenstand
- 3.5: Oberseite
- 4.1: Hand
- 4.2: Handflansch
- 4.3: Greifwerkzeug
- 4.4: Gegenstand
- 4.6: Palette
- 4.7: Förderer
- 5.1: Hand
- 5.2: Handflansch
- 5.3: Greifwerkzeug
- 5.4: Gegenstand
- 5.8: Verbindungselement
- 5.8a: Gelenklager
- 5.9: Aufhängteil
- 5.10: Verbindungselement
- 5.11: Federelement
- 5.12: Dämpferelement
- A1: Roboterachse
- A2: Roboterachse
- A3: Roboterachse
- A4: Roboterachse
- A4': Handachse
- A5: Roboterachse
- A5': passive Achse
- A6: Handachse
- B: Bewegungsrichtung
- d: Abstand
- Fₐ: Beschleunigungskraft
- Fᵢ: Trägheitskraft
- F_{g}: Gewichtskraft
- F_{M}: Zusatzkraft
- Fᵣ: resultierende Kraft
- g: Erdbeschleunigung
- M: Drehmoment
- P_{S}: Startpose
- P_{E}: Endpose
- S: Schwerpunkt
- t: Zeit
- ϕ: Anstellwinkel
- v: Bahngeschwindigkeit

## Patentansprüche

1. Verfahren zum Bewegen eines mehrachsigen Handhabungssystems mit einer Anzahl von Antriebs- und Steuereinrichtungen zum Bewegen der Achsen sowie einem mit einer Hand (2.1) des Handhabungssystems (1.0) verbundenen Greifwerkzeug (2.3) und einem von diesem gehaltenen Gegenstand (2.4), **dadurch gekennzeichnet, dass** die Bewegung, unter Berücksichtigung von Schwerpunktlage und Gewicht des zu bewegenden Gegenstandes (2.4), durch aktive Steuerung einzelner Achsen des Handhabungssystems (1.0) derart erfolgt, dass der Gegenstand (2.4) gemeinsam mit Greifwerkzeug (2.3) und Handflansch (2.2) seitlich verkippt wird, so dass bewegungsabhängige Momente auf den vom Greifwerkzeug gehaltenen Gegenstand (2.4) weitgehend ausgeschaltet werden und zwischen Gegenstand (2.4) und Greifwerkzeug (2.3) im Wesentlichen nur Normalkräfte wirken.

2. Verfahren nach Anspruch 1, **dadurch gekennzeichnet, dass** der Gegenstand (2.4) auf einer vorbestimmten Bahn bewegt wird.

3. Verfahren nach Anspruch 1 oder 2, **dadurch gekennzeichnet, dass** vom Gegenstand (2.4) auf das Greifwerkzeug (2.3) ausgeübte Kräfte und Momente durch am Greifwerkzeug (2.3) und/oder zwischen Hand (2.1) und Greifwerkzeug (2.3) vorhandene Sensoren (2.2a) gemessen werden.

4. Handhabungssystem mit einer Mehrzahl von beweglichen Achsen und diesen zugeordneten Antriebs- und Steuereinrichtungen sowie einem mit einer Hand (2.1) des Handhabungssystems (1.0) verbundenen Greifwerkzeug (2.3) und einem von diesem gehaltenen Gegenstand (2.4), insbesondere zum Durchführen des Verfahrens nach einem der Ansprüche 1 bis 3, **gekennzeichnet durch** eine Einrichtung zur aktiven Steuerung einzelner Achsen des Handhabungssystems (1.0) derart, dass der
Gegenstand (2.4) gemeinsam mit Greifwerkzeug (2.3) und Handflansch (2.2) seitlich verkippt wird, unter Berücksichtigung von Schwerpunktlage und Gewicht des zu bewegenden Gegenstandes derart, dass bewegungsabhängige Momente auf den vom Greifwerkzeug (2.3) gehaltenen Gegenstand (2.4) weitgehend ausschaltbar sind und zwischen Gegenstand (2.4) und Greifwerkzeug (2.3) im Wesentlichen nur Normalkräfte wirken.

5. Handhabungssystem nach Anspruch 4, **dadurch gekennzeichnet, dass** zwischen Hand (2.1) und Greifwerkzeug (2.3) wenigstens ein Sensor (2.2a) zum Messen von Kräften und Momenten vorhanden ist.

6. Handhabungssystem nach einem der Ansprüche 4 bis 5, **dadurch gekennzeichnet, dass** am Greifwerkzeug (2.3) wenigstens ein Sensor (2.2a) zum Messen von Kräften und Momenten angeordnet ist.

## Claims

1. A method of moving a multi-axis manipulator system comprising a number of drive devices and control devices for moving the axes, as well as a gripping tool (2.3) which is connected to a hand (2.1) of the manipulator system (1.0) and an object (2.4) held by the latter, **characterised in that** the movement, taking into account the position of the centre of gravity and the weight of the object (2. 4) to be moved, is performed, by active controlling of individual axes of the manipulator system (1.0), in such a way that the object (2.4), together with the gripping tool (2.3) and the hand flange (2.2), is tilted sideways so that motion-dependent torque acting on the object (2.4) held by the gripping tool is largely eliminated and so that substantially only normal forces act between the object (2.4) and the gripping tool (2.3).

2. The method according to claim 1, **characterised in that** the object (2.4) is moved on a predetermined path.

3. The method according to claim 1 or 2, **characterised in that** forces and torque exerted by the object (2.4) on the gripping tool (2.3) are measured by sensors (2.2a) which are to be found on the gripping tool (2.3) and / or between the hand (2.1) and the gripping tool (2.3).

4. A manipulator system comprising a plurality of movable axes, and drive devices and control devices associated with these, as well as a gripping tool (2.3) which is connected to a hand (2.1) of the manipulator system (1.0) and an object (2.4) held by the latter, in particular for carrying out the method according to any one of the claims 1 to 3, **characterised by** a device for the active controlling of individual axes of the manipulator system (1.0) in such a way that the object (2.4) together with the gripping tool (2.3) and the hand flange (2.2) is tilted sideways, taking into account the position of the centre of gravity and the weight of the object to be moved, in such a way that motion-dependent torque acting on the object (2.4) held by the gripping tool (2.3) can largely be eliminated and so that substantially only normal forces act between the object (2.4) and the gripping tool (2.3).

5. The manipulator system according to claim 4, **characterised in that** at least one sensor (2.2a) for measuring forces and torque is to be found between the hand (2.1) and the gripping tool (2.3).

6. The manipulator system according to any one of the claims 4 to 5, **characterised in that** at least one sensor (2.2a) for measuring forces and torque is arranged on the gripping tool (2.3).

## Revendications

1. Méthode de déplacement d'un système de manipulation à plusieurs axes avec un nombre de dispositifs d'entraînement et de commande pour déplacer les axes ainsi qu'un outil de préhension (2.3) relié à une main (2.1) du système de manipulation (1.0) et un objet (2.4) retenu par celui-ci, **caractérisée en ce que** le déplacement, en tenant compte de la position du centre de gravité et du poids de l'objet à déplacer (2.4), se fait par commande active de différents axes du système de manipulation (1.0) de sorte que l'objet (2.4) est basculé latéralement conjointement avec l'outil de préhension (2.3) et la bride de main (2.2) de sorte que des couples dépendant du déplacement sur l'objet (2.4) retenu par l'outil de préhension sont largement désactivés et sensiblement seules des forces normales agissent entre l'objet (2.4) et l'outil de préhension (2.3).

2. Méthode selon la revendication 1, **caractérisée en ce que** l'objet (2.4) est déplacé sur un trajet prédéterminé.

3. Méthode selon la revendication 1 ou 2, **caractérisée en ce que** des forces et couples exercés par l'objet (2.4) sur l'outil de préhension (2.3) sont mesurés par des capteurs (2.2a) présents au niveau de l'outil de préhension (2.3) et/ou entre la main (2.1) et l'outil de préhension (2.3).

4. Système de manipulation avec une pluralité d'axes mobiles et de dispositifs d'entraînement et de commande associés à ceux-ci ainsi qu'un outil de préhension (2.3) relié à une main (2.1) du système de manipulation (1.0) et un objet (2.4) retenu par celui-ci, en particulier pour la réalisation de la méthode selon l'une quelconque des revendications 1 à 3, **caractérisé par** un dispositif pour la commande active de différents axes du système de manipulation (1.0) de sorte que l'objet (2.4) est basculé latéralement conjointement avec l'outil de préhension (2.3) et la bride de main (2.2), en tenant compte de la position du centre de gravité et du poids de l'objet à déplacer de sorte que des couples dépendant du déplacement sur l'objet (2.4) retenu par l'outil de préhension (2.3) sont largement désactivés et sensiblement seules des forces normales agissent entre l'objet (2.4) et l'outil de préhension (2.3).

5. Système de manipulation selon la revendication 4, **caractérisé en ce qu'**au moins un capteur (2.2a) pour la mesure de forces et de couples est présent entre la main (2.1) et l'outil de préhension (2.3).

6. Système de manipulation selon l'une quelconque des revendications 4 à 5, **caractérisé en ce qu'**au moins un capteur (2.2a) pour la mesure de forces et de couples est agencé au niveau de l'outil de préhension (2.3).
